# EUROPEAN PATENT APPLICATION

(11) **EP 1 191 736 A2**
(43) Date of publication of application: **27.03.2002**
(21) Application number: 01308083.3
(22) Date of filing: 24.09.2001
(51) Int. Cl.: H04L 9/00

(54) **E-commerce security processor alignment logic**

(30) Priority: 25.09.2000 US 235190 P; 14.08.2001 US 929178
(71) Applicant: Broadcom Corporation, Irvine, CA 92618-3616 (US)
(72) Inventor: Matthews, Donald P., JR., Morgan Hill, California 95037 (US)
(74) Representative: Browne, Robin Forsythe, Dr.

(57) **Abstract**

Provided is an architecture for a cryptography accelerator chip that allows significant performance improvements over previous prior art designs. The chip architecture enables a degree of parallel processing of authentication and encryption/decryption functions achieved by an alignment logic configuration that distinguishes portions of a non-pre-padded network security protocol (e.g., SSL (v3) or TLS) packet requiring one and/or another operation (authentication and/or encryption) to permit single pass processing of non-pre-padded network security protocol data. In some embodiments, processing efficiency may be further enhanced by the pipelining of successive packets to be processed.

## Description

### CROSS-REFERENCE TO RELATED APPLICATIONS

This application claims priority under U.S.C. 119(e) from U.S. Provisional Application No. 60/235,190, entitled "E-Commerce Security Processor," as of filing on September 20, 2000, the disclosure of which is herein incorporated by reference for all purposes.

### BACKGROUND OF THE INVENTION

### 1. Field of the Invention.

The present invention relates to the field of cryptography, and more particularly to an integrated circuit chip architecture and method for cryptography acceleration.

### 2. Description of the Related Art

Many methods for performing cryptography processing are well known in the art and are discussed, for example, in Applied Cryptography, Bruce Schneier, John Wiley & Sons, Inc. (1996, 2nd Edition), incorporated by reference in its entirety for all purposes. In order to improve the speed of cryptography processing, specialized cryptography accelerators have been developed that typically out-perform similar software implementations. Examples of such cryptography accelerators include the Hi/fn™ 7751, the VLSI™ VMS115, and the BCM™ 5805 manufactured by Broadcom, Inc. of San Jose, CA.

Many cryptography protocols incorporate encryption/decryption and authentication functionalities. These include the IP layer security standard protocol, IPSec (RFC2406), and other network security protocols Secure Socket Layer (SSL) (v3) (Netscape Communications Corporation) (referred to herein as SSL) and Transport Layer Security (TLS) (RFC 2246), all commonly used in electronic commerce transactions. IPSec (RFC2406) specifies two standard algorithms for performing authentication operations, HMAC-MD5-96 (RFC2403) and HMAC-SHA1-96 (RFC2404). SSL and TLS use a MAC and an HMAC, respectively, for authentication. The underlying hash algorithm in either case can be either MD5 (RFC1321) or SHA1 (NIST (FIPS 180-1)). SSL and TLS deploy such well-known algorithms as RC4, DES, triple DES for encryption/decryption operations. These network protocols are also described in detail in E. Rescorla, *SSL and TLS: Designing and Building Secure Systems* (Addison-Wesley, 2001) and S.A. Thomas, *SSL & TLS Essentials: Securing the Web* (John Wiley & Sons, Inc. 2000), both of which are incorporated by reference herein for all purposes. These protocols and their associated algorithms are well known in the cryptography art and are described in detail in the noted National Institute of Standards and Technology (NIST), IETF (identified by RFC number) and other noted sources and specifications, incorporated herein by reference for all purposes.

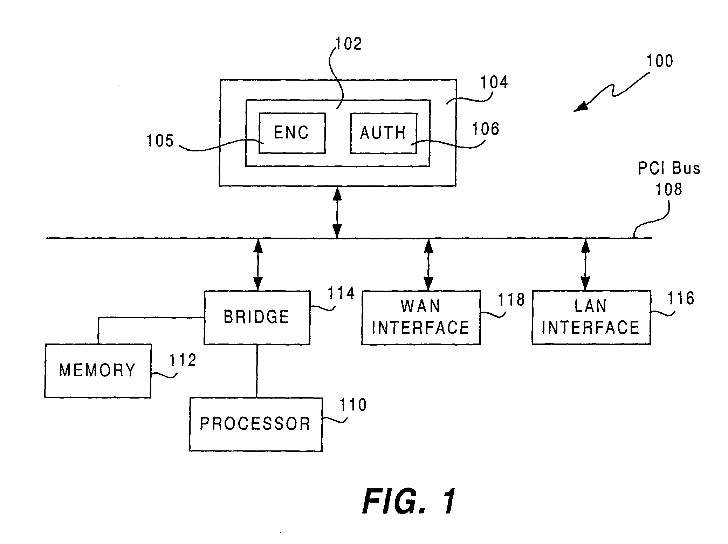

Fig. 1 shows a block diagram of a cryptography processing system hardware implementation suitable for cryptography protocols incorporating encryption/decryption and authentication functionalities. The hardware for the cryptography processing is implemented as a stand-alone cryptography processing chip 102 and incorporated into a standard processing system 100. The cryptography processing chip 102 includes encryption 105 and authentication 106 components, and resides on an expansion card 104 connected to a standard PCI bus 108 via a standard on-chip PCI interface. Data to be cryptography processed moves to and from the cryptography processing chip 102 via the PCI bus 108. The processing system 100 also includes a processing unit 110 and a system memory unit 112. The processing unit 110 and the system memory unit 112 may be attached to the system bus 108 via a bridge and memory controller 114. A LAN interface 116 attaches the processing system 100 to a local area network and receives packets for processing and writes out processed packets to the network. Likewise, a WAN interface 118 connects the processing system to a WAN, such as the Internet, and manages in-bound and out-bound packets, providing automatic security processing for IP packets.

Efficient hardware implementations for processing IPSec data packets are known, including parallel authentication and encryption/decryption processing implementations such as a described in co-pending application No. 09/510,486. Such parallel processing hardware implementations of IPSec data are facilitated by the fact that IPSec MACs are not encrypted and therefore the data can be pre-padded. Such parallel processing of encryption and authentication operations allows for a reduction of transmissions into and out of the cryptography processing chip across the PCI bus to a single pass (i.e., data for cryptography processing in; cryptography processed data out), resulting in more efficient utilization of the PCI bus 108.

Other network security protocol packets, such as SSL and TLS packets, however, are not pre-padded, and are therefore not amenable to the same parallel processing hardware implementations as IPSec data. According to such implementations, two passes across the PCI bus (i.e., one pass in and out for each of the authentication and encryption/decryption operations) would be required. This heavy data transmission requirement would increase traffic and potentially create a bottleneck at the PCI bus 108, thereby substantially impacting the extent to which hardware implementation of cryptography processing could improve processing efficiency for such non-pre-padded network security protocol packet data.

Thus, the development of a hardware implementation configured to reduce the number of transmissions in and out of a cryptography processing chip across a PCI bus would be desirable in order to improve the efficiency of the cryptography processing of non-pre-padded network security protocol packets.

### SUMMARY OF THE INVENTION

In general, the present invention provides an architecture for a cryptography accelerator chip that allows significant performance improvements in network security protocol data packet processing over previous designs. The chip architecture enables a degree of parallel processing of authentication and encryption/decryption functions achieved by an alignment logic configuration that distinguishes portions of a non-pre-padded network security protocol packet (e.g., an SSL or TLS packet) requiring one and/or another operation (authentication and/or encryption) to permit single pass processing of data. In some embodiments, processing efficiency may be further enhanced by pipelining successive packets to be processed.

In one aspect, the invention provides a method of processing non-pre-padded network security protocol data packets. The method involves providing a cryptography processing architecture on a chip and passing non-pre-padded network security protocol data for both authentication and cryptography operations from a source to the chip. On the chip, conducting, in hardware, authentication and encryption operations on the network security protocol data, and passing the cryto-processed network security protocol data from the chip to the source. The network security protocol data is passed between the chip and the source in a single pass.

In another aspect, the invention provides a cryptography accelerator chip architecture. The architecture includes an authentication component, an encryption component, and a pad engine computing and outputting pad length and bytes to said encryption component.

In a further aspect, the method and chip architecture of the present invention may be implemented in an electronic commerce computer network system.

These and other features and advantages of the present invention will be presented in more detail in the following specification of the invention and the accompanying figures which illustrate by way of example the principles of the invention.

### BRIEF DESCRIPTION OF THE DRAWINGS

The present invention will be readily understood by the following detailed description in conjunction with the accompanying drawings, in which:
Fig. 1 is a high-level block diagram of a system implementing a cryptography accelerator chip.
Fig. 2 is a tabular representation of the format of an SSL packet.
Fig. 3 is a block diagram of a cryptography accelerator chip architecture in accordance with one embodiment of the present invention.
Fig. 4 is a register block diagram showing conceptual memory storage describing the alignment logic used to implement an embodiment of the present invention.
Fig. 5 is a FIFO representation describing the alignment logic used to implement an embodiment of the present invention.
Fig. 6 is a high-level block diagram of a system implementing a cryptography accelerator chip in accordance with one embodiment of the present invention.

### DETAILED DESCRIPTION OF THE INVENTION

Reference will now be made in detail to some specific embodiments of the invention including the best modes contemplated by the inventors for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as may be included within the spirit and scope of the invention as defined by the appended claims. In the following description, numerous specific details are set forth in order to provide a thorough understanding of the present invention. The present invention may be practiced without some or all of these specific details. In other instances, well known process operations have not been described in detail in order not to unnecessarily obscure the present invention.

In general, the present invention provides an architecture for a cryptography accelerator chip that allows significant performance improvements in network security protocol data packet processing over previous designs. The chip architecture enables a degree of parallel processing of authentication and encryption/decryption functions achieved by an alignment logic configuration that distinguishes portions of a non-pre-padded network security protocol (e.g., SSL or TLS) packet requiring one and/or another operation (authentication and/or encryption/decryption) to permit single pass processing of the non-pre-padded network security protocol data. In some embodiments, processing efficiency may be further enhanced by pipelining successive packets to be processed.

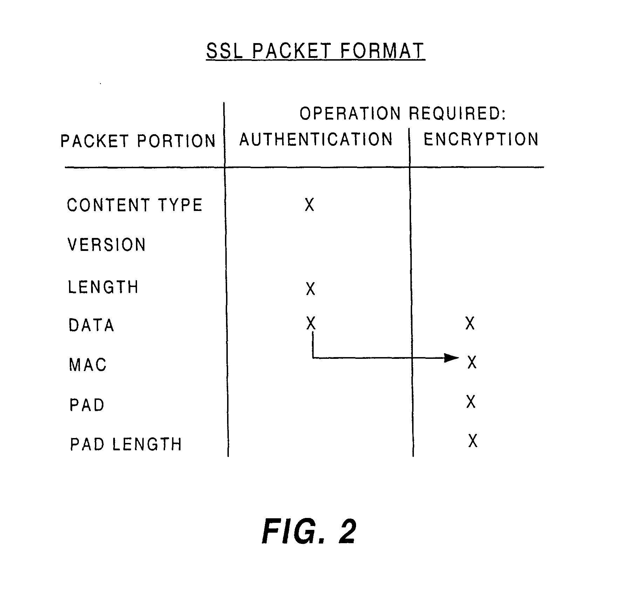

The invention will now be further described with reference to a particular non-prep-padded network security protocol, SSL (v3) (referred to herein as SSL). It should be understood that the invention is applicable beyond SSL to other non-pre-padded network security protocols, for example, TLS, generally to permit single pass processing of authentication and encryption/decryption data. The format of SSL data is represented (outbound direction) in Fig. 2 with "x" indicating that an operation (authentication or encryption) is required on that portion of the SSL packet. SSL encryption requires computation of a message authentication code ("MAC"). As indicated by the arrow, computation of the MAC requires as input the Content Type, Length and Data portions of the SSL packet (as noted above, TLS uses an HMAC in which the Version is included in the computation; other aspects of the authentication and encryption of TLS data are similar to SSL as it relates to the present invention). Therefore, as noted above, conventional implementations use two passes across the PCI bus to crypto process SSL data, one for authentication and one for encryption.

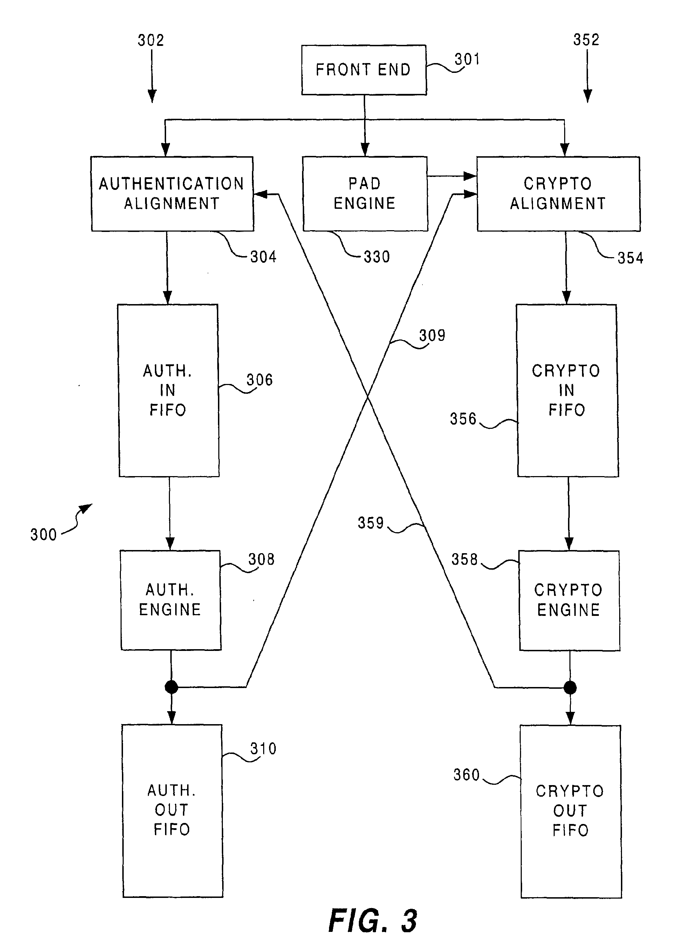

The present invention implements a degree of parallel processing of encryption/decryption and authentication operations through alignment logic on the cryptography processing chip that allows for receipt of all SSL packet portions by the chip, padding and alignment, cryptographic processing, and transmission of the cryptography processed data out of the chip in a single pass over the PCI bus. This alignment logic is described with reference to the chip block diagram, register block diagram showing conceptual memory storage, and FIFO representation depicted in Figs. 3, 4 and 5, respectively.

Fig. 3 is a block diagram of a cryptography accelerator chip architecture in accordance with one embodiment of the present invention. The chip may reside on an expansion card. The chip architecture 300 includes authentication and encryption (also handling decryption) components. The authentication component 302 includes an authentication alignment block 304 that receives data for cryptography processing from a system front end 301, for example, off a network via a PCI bus. In the authentication alignment block 304, non-valid bytes are removed from the data stream and the data is packed and aligned for input into an authentication in FIFO buffer 306. In one embodiment the FIFO is 32 bits wide (but may be of any other suitable width, e.g., 64 bits).

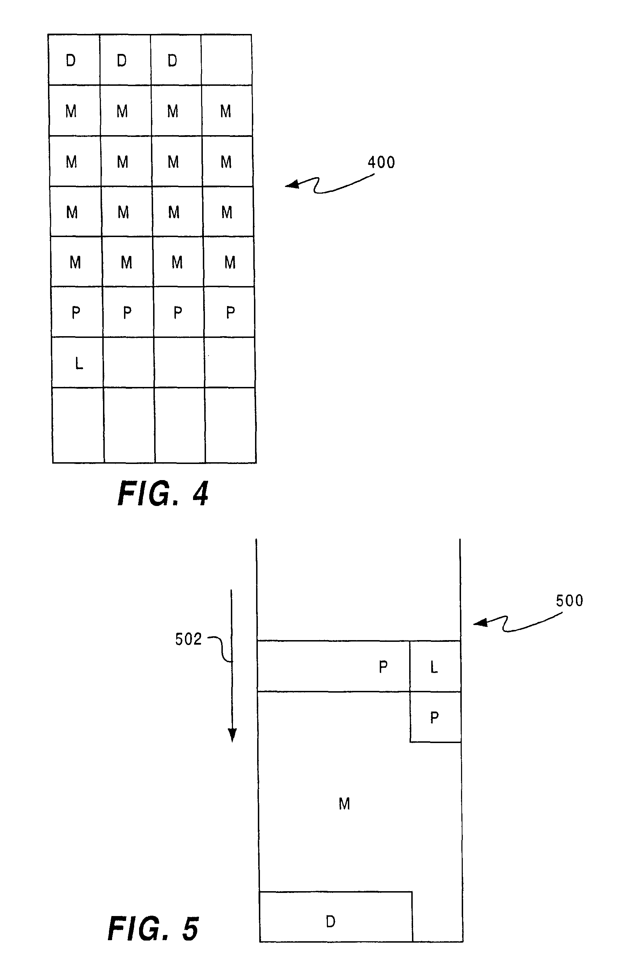

As described in further detail with reference to Figs. 4 and 5, the portions of the data packet are loaded into the FIFO 306 in the order received, and authentication operations are performed on the data when sufficient data is received for the operation to begin. In the case of SSL, both of the supported authentication protocols, MD5 and SHA1, specify that data is to be processed in 512-bit blocks. As defined in the MD5 and SHA1 specifications, if the data in a packet to be processed is less than a multiple of 512 bits, padding is applied to round-up the data length to a multiple of 512 bits.

Once 512 bits or a complete packet worth of data padded to a multiple of 512 bits have been loaded into the FIFO 306, a 512-bit data block is transferred to the authentication engine 308, and authentication processing begins. Depending on the implementation of the authentication engine, processing may begin before all 512 bits are loaded into the FIFO 306 (e.g., processing may begin once a 32 bit word is loaded in a 32 bit FIFO), but processing of the block may not be completed until all 512 bits of the block are loaded. As noted in connection with Fig. 2, SSL encryption requires computation of a message authentication code ("MAC"), and computation of the MAC requires as input the Content Type, Length and Data portions of the SSL packet. The architecture and alignment logic of the present invention are configured to take the authenticated Content Type, Length and Data from the authentication component and feed it back into the alignment block of the cryptography component 352. In this way, some partial parallel authentication and encryption processing is enabled, as described further below. The authentication component 302 of the chip architecture 300 also has an authentication out FIFO 310 for the final authentication hash for an inbound packet (decryption).

The encryption component 352 of the architecture 300 also includes an encryption (also handling decryption) alignment block 354 that receives data for cryptography processing from a front end source 301, and also feedback, illustrated by arrow 309, of the calculated MAC from the authentication engine 308 of the authentication component 302 for parallel processing. In addition, in order to properly process the data, the encryption ("crypto") alignment block requires the Pad and Pad Length to be added if a block cipher (e.g., DES, 3DES, etc.) is used. This data is provided by a pad engine 330. The pad engine 330 calculates the pad length and provides the Pad Length calculation and appropriate number of Pad bytes to the cryptography alignment block. As described further below in connection with Figs. 4 and 5, in the alignment block 354, non-valid bytes are removed from the data stream and the data is packed and aligned for input into a cryptography in FIFO buffer 356.

For decryption of inbound packets, the data is received at the cryptography alignment block 354 and decrypted by processing through the crypto engine 358, before being fed back to the authentication alignment block for processing through the authentication component, as illustrated by arrow 359. The part of the encrypted packet that contains the MAC value and the padding added by the other sender is not fed back to the authentication alignment block. The pad engine 330 is not involved in the decryption processing.

Fig. 4 is a register block diagram showing conceptual memory storage to describe the alignment logic used to implement the cryptography alignment aspect of an embodiment of the present invention, accomplished by encryption alignment block 354 of Fig. 3. This representation depicts SSL data in the outbound direction. In this example, the register 400 is 32 bits (4 8 bit bytes) wide, but, as noted above, may be implemented in other widths consistent with the present invention. The data in the register represent those portions of the SSL format that are required for the encryption operation. Each row of the register contains a single portion type. In this example, the Data portion (D) is just 3 bytes, and the fourth byte of the Data row in the register is a non-valid byte. The MAC (M) is 128 bits (16 bytes) of data. The Pad (P) is of a size, indicated by a Pad Length byte (L) and generated by a Pad Engine on the chip, to pad the total size of the data portions to be processed through the encryption operation. The total size requirement varies with the particular encryption engine used. In the case of DES (or 3DES), an even number of words is required and the data to be processed is typically padded to a multiple of 64 bits since DES operates on data blocks of that size.

Referring to Fig. 5, for efficient processing, the data portions represented in Fig. 4 are loaded into a FIFO buffer 500 (equivalent to FIFO 356 in Fig. 3) to await encryption processing. Proper loading of the FIFO requires packing of the data to eliminate non-valid bytes. Fig. 5 shows the data depicted in the example of Fig. 4 packed into a FIFO buffer to illustrate an aspect of the alignment logic used to implement an embodiment of the present invention. The depicted FIFO 500 is 32 bits wide and is loaded and read in the direction of the arrow 502. In the example shown, the data from the register 400 is aligned into six 32-bit rows in the FIFO 500, therefore representing three DES data blocks.

Referring again to Fig. 3, in the case of DES, 64 bit data blocks are passed from the cryptography in FIFO 356 to the cryptography engine 358 for processing as soon as they are received in properly aligned form. The encrypted result is passed from the cryptography engine to a cryptography out FIFO 360 for output form the cryptography component of the chip architecture 300.

Further efficiency may be achieved by pipelining data from subsequent packets to be processed. That is, as the authentication component 302 of the architecture 300 completes calculation of the MAC and feeding it back to the crytpo component alignment block 354 for the last (or only) 512-bit data block of a packet, the data requiring authentication for the next packet received from the front end 301 is loaded into the authentication alignment block 304, processed and passed to the alignment in FIFO 306 so that authentication processing of the next packet of data may begin before encryption of the previously authenticated block is complete.

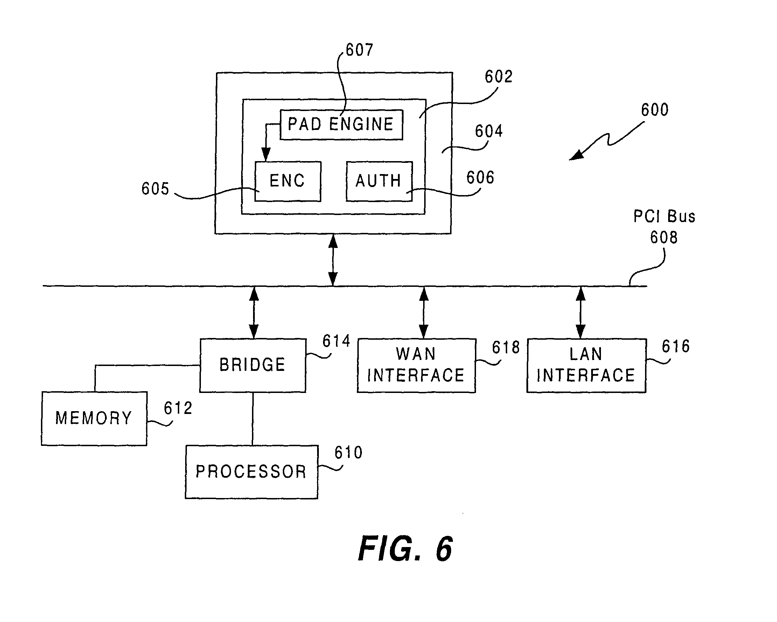

Fig. 6 is a high-level block diagram of a system implementing a cryptography accelerator chip architecture in accordance with one embodiment of the present invention. The system implements the alignment logic of the present invention, described above. The hardware for the cryptography processing is implemented as a stand-alone cryptography accelerator chip 602 and incorporated into a standard processing system 600. The cryptography accelerator chip 602 includes encryption 605 and authentication 606 components, and resides on an expansion card 603 connected to a standard PCI bus 608 via a standard on-chip PCI interface. The chip also includes a pad engine 607 for calculating the pad length and providing the Pad Length calculation and appropriate number of Pad bits to the cryptography alignment block to enable efficient alignment and processing of cryptography data, as described above. The processing system 600 includes a processing unit 610 and a system memory unit 612. The processing unit 610 and the system memory unit 612 may be attached to the system bus 608 via a bridge and memory controller 614. A LAN interface 616 attaches the processing system 600 to a local area network and receives packets for processing and writes out processed packets to the network. Likewise, a WAN interface 618 connects the processing system to a WAN, such as the Internet, and manages in-bound and out-bound packets, providing automatic security processing for packets.

As described above, this chip architecture enables a degree of parallel processing of authentication and encryption/decryption functions achieved by an alignment logic configuration that distinguishes portions of a non-pre-padded network security protocol (e.g., SSL or TLS) packet requiring one and/or another operation (authentication and/or encryption/decryption) to permit single pass processing of non-pre-padded network security protocol data. The architecture configuration receives and efficiently processes authentication and encryption data transmitted to the cryptography accelerator chip over the PCI bus in a single pass, obviating the need for separate passes of authentication and cryptography data in prior designs.

A further advantage achieved by the present invention is to reduce some of the processing load from the off-chip processor. In conventional cryptography chip designs, alignment and padding functions are performed on the processor and the aligned and padded data is sent over the PCI bus to the cryptography chip for cryptography processing. The architecture of the present invention performs alignment and padding on the cryptography chip thereby reducing the load on the processor, reducing the amount of data to be sent across the PCI bus and the number of passes required to complete cryptography processing.

### CONCLUSION

Although the foregoing invention has been described in some detail for purposes of clarity of understanding, those skilled in the art will appreciate that various adaptations and modifications of the just-described preferred embodiments can be configured without departing from the scope and spirit of the invention. For example, one of skill in the art will understand that other non-pre-padded network security protocols having analogous formats to SSL as it pertains to this invention (e.g., TLS) may be used. Therefore, the described embodiments should be taken as illustrative and not restrictive, and the invention should not be limited to the details given herein but should be defined by the following claims and their full scope of equivalents.

## Claims

1. A method of processing network security protocol data packets, comprising:
providing a cryptography processing architecture on a chip;
passing non-pre-padded network security protocol data for both authentication and cryptography operations from a source to said chip;
conducting, in hardware, authentication and encryption, operations on the network security protocol data; and
passing the cryto-processed network security protocol data from said chip to said source;
wherein said non-pre-padded network security protocol data is passed between said chip and said source in a single pass.

2. A method according to claim 1, wherein said network security protocol is SSL (v3).

3. A method according to claim 1, wherein said network security protocol is TLS.

4. A method according to any preceding claim, further comprising simultaneously with conducting the cryptography operations on the data, pre-loading network security protocol data from a second non-pre-padded network security protocol packet onto the chip.

5. A method according to any preceding claim, further comprising simultaneously with conducting the encryption operations on the data, conducting, in hardware, authentication operations on the network security protocol data from the second network security protocol packet.

6. A method according to any preceding claim, wherein said conducting, in hardware, authentication and encryption operations on the non-pre-padded network security protocol data comprises conducting padding and alignment operations on the chip.

7. A method according to any preceding claim, wherein said calculation of a pad length for padding operations is conducted by a pad engine component of the chip architecture.

8. A method according to any preceding claim, wherein said conducting, in hardware, authentication and encryption operations on the network security protocol data comprises feeding back a MAC value calculated during authentication operations for processing in the encryption operations.

9. A method according to any preceding claim, wherein said encryption operations further include decryption operations.

10. A method according to claim 9, wherein conducting, in hardware, authentication and decryption operations on the network security protocol data comprises feeding back decrypted data for processing in the authentication operations.

11. A cryptography accelerator chip architecture, comprising:
an authentication component;
an encryption component; and
a pad engine computing and outputting pad length and pad to said encryption component.

12. A cryptography accelerator architecture according to claim 11, wherein said architecture is configured to process non-pre-padded network security protocol packets.

13. A cryptography accelerator architecture according to any of claims 11-12, wherein said chip resides on an expansion card.

14. A cryptography accelerator architecture according to any of claims 11-13, wherein said authentication component comprises an alignment block, an authentication data input buffer, and an authentication engine.

15. A cryptography accelerator architecture according to any of claims 11-14, wherein said encryption component comprises an alignment block, an encryption data input buffer, and an encryption engine.

16. A cryptography accelerator architecture according to any of claims 11-15, wherein said architecture is configured to process SSL data.

17. A cryptography accelerator architecture according to any of claims 11-15, wherein said architecture is configured to process TLS data.

18. An electronic commerce computer network system, comprising:
a front end data source;
a PCI bus connecting said front end data source to a cryptography accelerator chip architecture as claimed in claim 11.

19. A system according to claim 18, wherein said front end data source comprises:
one or more network interfaces;
a processor connected with said interfaces;
a memory connected with said processor; and
a bridge and memory controller connected with said processor and memory.

20. A system according to any of claim 18-19, wherein said chip resides on an expansion card.

21. A system according to any of claims 18-20, wherein said architecture is configured to process network security protocol packets.

22. A system according to any of claims 18-21, wherein said authentication component comprises an alignment block, an authentication data input buffer, and an authentication engine.

23. A system according to any of claims 18-22, wherein said encryption component comprises an alignment block, an encryption data input buffer, and an encryption engine.

24. A system according to any of claims 18-23, wherein said network security protocol is SSL (v3).

25. A system according to any of claims 18-23, wherein said network security protocol is TLS.
